# FASCICULE DE BREVET EUROPEEN

(11) **EP 0 470 990 B1**
(45) Date de publication et mention de la délivrance du brevet: **06.07.1994**
(21) Numéro de dépôt: 90907163.1
(22) Date de dépôt: 02.05.1990
(51) Int. Cl.: A01B 15/16

(54) **Disque de labour destiné à être monté libre en rotation sur le châssis d'une charrue**
Drehende Scheibe für einen Scheibenpflug
Tilling wheel for rotatable mounting to the frame of a plough

(30) Priorité: 02.05.1989 FR 8905815; 03.11.1989 FR 8914424
(43) Date de publication de la demande: 19.02.1992
(73) Titulaire: JAVERLHAC, Jean-Charles, Guimps, F-16300 Barbezieux (FR)
(72) Inventeur: JAVERLHAC, Jean-Charles, Guimps, F-16300 Barbezieux (FR)
(74) Mandataire: Nony, Michel
(86) Numéro de dépôt international: FR9000314
(87) Numéro de publication internationale: WO9013218

(56) Documents cités:
- EP-A- 162 197
- FR-A- 390 873
- FR-A- 455 691
- US-A- 2 034 579
- US-A- 2 539 053

## Description

La présente invention concerne un disque de labour destiné à être monté avec plusieurs autres libres en rotation autour d'un axe solidaire du châssis d'une charrue, ledit axe étant incliné par rapport à la direction d'avance de la charrue de manière à imprimer un mouvement de rotation aux disques.

Ces disques de type connu se présentent généralement sous la forme d'une calotte sphérique en acier centrée sur leur axe de rotation. Ils forment donc une cuvette au fond de laquelle se trouve leur moyeu et provoquent de ce fait un retournement partiel de la terre lors du labour.

De tels disques de labour tels que décrits dans le document US-A-2 034 579 comportent des encoches à leur périphérie. Ils ne donnent pas entière satisfaction du fait que d'une part, ils ont tendance à recueillir et à accrocher les végétaux poussant à la surface du terrain labouré et que d'autre part, la surface du terrain labouré ne se présente pas toujours avec la structure que l'on souhaite lui conférer.

Le document EP-A-0 162 197 décrit une charrue à disque entraînée en rotation dont la périphérie présente des lobes convexes réunis entre eux par des parties radiales de manière à réaliser des découpes dans le sol. Ce document montre les caractéristiques du préambule de la revendication 1.

Un autre inconvénient des disques de labour connus du type précité réside dans le fait qu'ils forment dans le terrain une semelle, c'est-à-dire qu'ils créent une surface de séparation franche entre la partie du terrain qui est labourée et qui est par conséquent meuble et la partie non labourée et par conséquent dure.

Les disques de labour connus du type précité présentent également l'inconvénient de former des mottes de terre de grandes dimensions, du fait que le terrain est attaqué suivant des lignes parallèles à la direction d'avance de la charrue.

La présente invention vise notamment à pallier ces inconvénients.

L'invention a pour objet un disque de labour destiné à être monté sur une charrue, en subissant une rotation lors du déplacement de la charrue, la périphérie du disque se présentant sous la forme d'une succession régulière de lobes convexes identiques caractérisé en ce que les lobes convexes identiques sont arrondis sur toute leur périphérie.

Il en résulte une ligne d'attaque du sol sinueuse qui foisonne le sol avant de le retourner, limitant ainsi la formation de mottes.

Afin de permettre un bon retournement du sol, les lobes se rejoignent de préférence suivant des angles francs, éventuellement légèrement arrondis pour éviter une faiblesse du métal au niveau de la jonction entre les différents lobes.

Selon un mode de réalisation de l'invention, la génératrice du disque de labour est constituée par une courbe ou un polygone concave dont une extrémité est à la périphérie du disque et dont l'autre est au voisinage de son centre, ladite génératrice étant entièrement située d'un seul côté de sa tangente qui est perpendiculaire à l'axe de rotation du disque, ladite tangente étant au contact de la génératrice en un point écarté de ses extrémités.

Cette forme particulière du disque permet d'augmenter sensiblement son diamètre tout en rabattant correctement la partie supérieure de la terre qui est labourée.

Il en résulte également un meilleur dégagement des végétaux poussant à la surface du terrain labouré et donc une meilleure pénétration et une rotation plus facile des disques qui travaillent ainsi dans de bien meilleurs conditions.

Les deux extrémités de la génératrice concave du disque peuvent se trouver dans le même plan mais il peut en être autrement et selon un mode de réalisation préféré, l'extrémité de la génératrice qui est située au voisinage de l'axe du disque est décalée vers l'avant en direction de l'avancement de la charrue.

A titre d'exemple, un disque de labour selon l'invention peut se présenter sous la forme d'une surface analogue à une portion de tore délimitée par un plan perpendiculaire à son axe ou de préférence par deux plans, le plan délimitant la périphérie extérieure du disque se trouvant par rapport au sens de la marche en arrière du plan perpendiculaire à l'axe qui délimite la périphérie interne du disque au voisinage de son moyeu.

La présente invention a également pour objet une charrue caractérisée par le fait qu'elle comporte des disques présentant les caractéristiques décrites ci-dessus, et plus particulièrement une telle charrue dans laquelles les lobes de deux disques adjacents sont décalés angulairement d'une valeur prédéterminée, par exemple d'un angle compris entre environ 10° et 30°, et de préférence entre 15° et 20°.

On donnera maintenant, à titre d'exemple non limitatif, quelques modes de réalisation particuliers de l'invention en référence au dessin annexé dans lequel :
- la figure 1 est une vue en élévation d'un mode de réalisation du disque de labour selon l'invention,
- les figures 2 à 5 sont des vues en coupe selon II-II de quatre variantes de réalisation du disque de la figure 1,
- la figure 6 est une vue en élévation d'une variante de la figure 1 qui comporte une raclette,
- la figure 7 est une vue en coupe selon VII-VII de la figure 6, et
- la figure 8 représente une charrue équipée de disques selon l'invention.

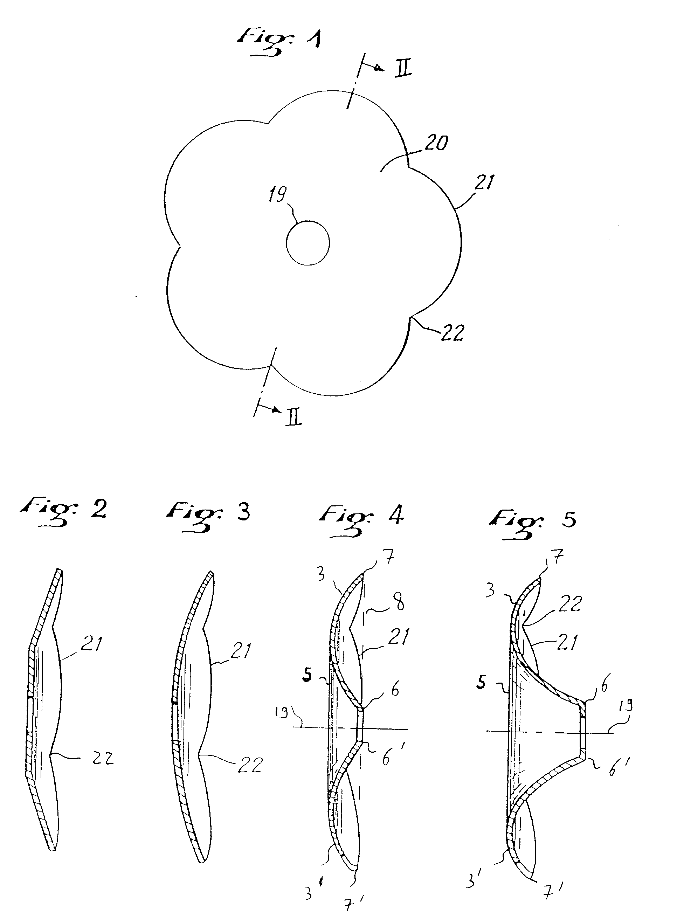

Le disque de labour de la figure 1 comporte à sa partie centrale un plateau percé(19) permettant son montage à la manière connue sur un axe solidaire du châssis d'une charrue, axe autour duquel il peut tourner librement.

Le disque de labour 20 selon l'invention (vu en élévation parallèlement à son axe) comporte à sa périphérie une succession de lobes 21 convexes vers l'extérieur et se rejoignant suivant des angles francs en 22.

De préférence, on prévoit un nombre impair de lobes 21, par exemple compris entre trois et dix, de manière à permettre un meilleur foisonnement du sol en évitant une attaque régulière de ce dernier.

Le disque de labour 20 de la figure 1 présente, dans la variante de la figure 2, une section tronconique et dans la variante de la figure 3, une section en forme de calotte sphérique.

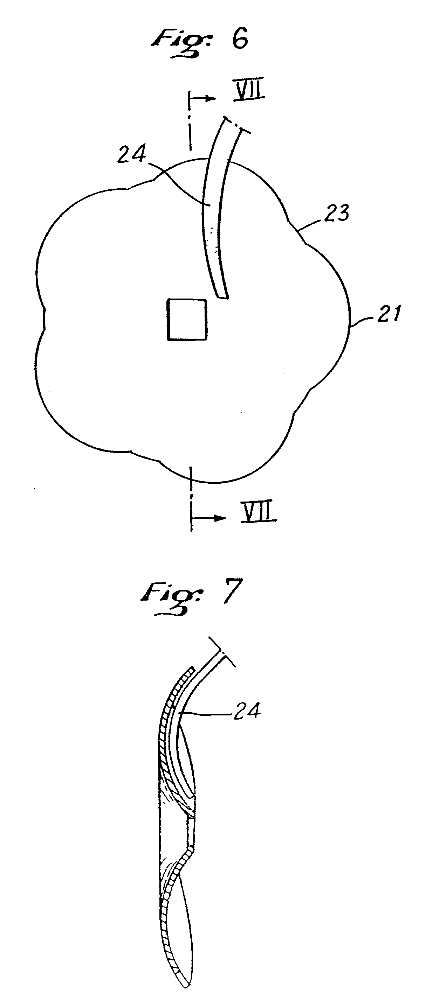

Le mode de réalisation de la figure 4 correspond à une section en forme de tore, et le mode de réalisation de la figure 5 correspond à une section également en forme de tore, la partie centrale étant plus saillante.

Dans le mode de réalisation de la figure 6, les lobes 21 sont reliés par des parties circulaires 23 qui évitent d'affaiblir le disque de labour.

Dans ce mode de réalisation il est en outre prévu une raclette 24 montée sur le châssis de la charrue. Cette raclette présente à la fois une concavité vue parallèlement à l'axe de rotation comme dans la figure 6 et perpendiculairement à cet axe comme dans la figure 7.

Une telle double concavité donne à la raclette 24 une meilleure efficacité pour rejeter la terre accrochée au disque de labour à l'écart de ce dernier, et lui permet ainsi de réaliser un travail optimal.

Les disques décrits ci-dessus peuvent être réalisés par exemple par formage ou par moulage, et avoir un diamètre compris entre 45 cm et 150 cm ou plus.

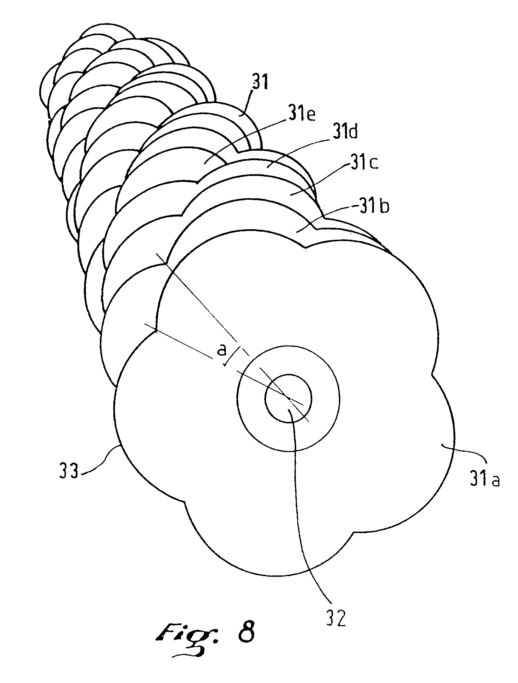

On voit sur la figure 8 un ensemble de disque 31 montés solidaires d'un arbre de rotation 32.

L'arbre 32 est monté libre en rotation sur le châssis (non représenté) de la charrue, de manière à être incliné par rapport à la direction d'avance de celle-ci.

Chaque disque présente dans le cas présent cinq lobes convexes adjacents 33.

On voit que deux disques adjacents, par exemple les disques 31a et 31b sont décalés d'un angle a qui, dans le cas présent, est sensiblement égal à 18°.

Un tel décalage de 18°, associé au fait que les disques comprennent cinq lobes, entraîne que la position des disques sur l'axe 32 se retrouve identique à elle-même tous les quatres disques, deux disques 31a et 31e ayant le même décalage angulaire étant séparés par trois disques 31b, 31c, et 31d.

Par conséquent tous les 18° de rotation de l'ensemble des disques 31, un disque sur quatre attaque le terrain, rendant ainsi le fonctionnement de la charrue pratiquement sans vibration.

## Revendications

1. Disque de labour (20) destiné à être monté sur une charrue, en subissant une rotation lors du déplacement de la charrue, la périphérie du disque (20) se présentant sous la forme d'une succession régulière de lobes convexes identiques (21), caractérisé en ce que les lobes convexes identiques (21) sont arrondis sur toute leur périphérie.

2. Disque selon la revendication 1, caractérisé par le fait que les lobes (21) se rejoignent suivant des angles francs (22).

3. Disque selon la revendication 2, caractérisé par le fait que les angles francs sont légèrement arrondis à leur sommet (23).

4. Disque selon l'une quelconque des revendications 1 à 3, caractérisé par le fait que sa génératrice (3, 3') est constituée par une courbe ou un polygone concave dont une extrémité (7, 7') est à la périphérie du disque et dont l'autre (6,6') est au voisinage de son centre (4), ladite génératrice étant entièrement située d'un seul côté de sa tangente (5) qui est perpendiculaire à l'axe de rotation (4) du disque, ladite tangente (5) étant au contact de la génératrice (3, 3') en un point écarté des extrémités de la génératrice.

5. Disque selon la revendication 4, caractérisé par le fait que les extrémités internes (6, 6') et externes (7, 7') des génératrices (3, 3') du disque sont situées dans un même plan perpendiculaire (8) à l'axe de rotation (4) du disque.

6. Disque selon la revendication 4, caractérisé par le fait que l'extrémité (6, 6') de la génératrice qui est située au voisinage de l'axe de rotation (4) est plus éloignée de la tangente (5) de la génératrice perpendiculaire à l'axe (4) du disque que l'extrémité externe (7, 7') de ladite génératrice.

7. Disque selon l'une quelconque des revendications 1 à 3, caractérisé par le fait qu'il se présente sous la forme générale d'une calotte sphérique ou tronconique.

8. Disque selon l'une quelconque des revendications 4 à 6, caractérisé par le fait qu'il est associé à une raclette (24) disposée au voisinage de sa surface et incurvée lorsqu'elle est vue parallèlement à l'axe du disque.

9. Charrue à disques, caractérisée par le fait qu'elle comporte, montée sur un arbre commun tournant librement une pluralité de disques selon l'une quelconque des revendications 1 à 8.

## Claims

1. Tilling disc (20) intended to be mounted on a plough, undergoing a rotation as the plough moves along, the periphery of the disc (20) being in the form of a regular succession of identical convex lobes (21), characterized in that the identical convex lobes (21) are rounded over their entire periphery.

2. Disc according to Claim 1, characterized by the fact that the lobes (21) join together with clean corners (22).

3. Disc according to Claim 2, characterized by the fact that the clean corners are slightly rounded at their vertex (23).

4. Disc according to any one of Claims 1 to 3, characterized in that its generatrix (3, 3') consists of a concave curve or polygon one end (7, 7') of which is at the periphery of the disc and the other (6, 6') of which is in the vicinity of its centre (4), the said generatrix being entirely located on just one side of its tangent (5) which is perpendicular to the rotation spindle (4) of the disc the said tangent (5) being in contact with the generatrix (3, 3') at a point distanced from the ends of the generatrix.

5. Disc according to Claim 4, characterized by the fact that the inner (6, 6') and outer (7, 7') ends of the generatrices (3, 3') of the disc are situated in one and the same plane (8), perpendicular to the rotation spindle (4) of the disc.

6. Disc according to Claim 4, characterized by the fact that the end (6, 6') of the generatrix which is situated in the vicinity of the rotation spindle (4) is further away from the tangent (5) of the generatrix perpendicular to the spindle (4) of the disc than the outer end (7, 7') of the said generatrix.

7. Disc according to any one of Claims 1 to 3, characterized by the fact that it is in the general form of a spherical or frustoconical cap.

8. Disc according to any one of Claims 4 to 6, characterized by the fact that it is associated with a scraper (24) located in the vicinity of its surface and curved when viewed parallel to the axis of the disc.

9. Disc plough, characterized by the fact that it includes, mounted on a common shaft rotating freely, a plurality of discs according to any one of Claims 1 to 8.

## Patentansprüche

1. Scheibe (20) zur Montage an einem Scheibenpflug, die bei der Fortbewegung des Pfluges in Drehung versetzt wird und an ihrem Umfangsrand die Form einer regelmäßigen Folge von identischen konvexen Lappen (21) hat, dadurch **gekennzeichnet**, daß die identischen konvexen Lappen (21) auf ihrem gesamten Umfang gerundet sind.

2. Scheibe nach Anspruch 1, dadurch **gekennzeichnet**, daß die Lappen (21) sich unter stumpfen Winkeln (22) aneinander anschließen.

3. Scheibe nach Anspruch 2, dadurch **gekennzeichnet**, daß die stumpfen Winkel an ihrem Scheitel (23) leicht abgerundet sind.

4. Scheibe nach irgendeinem der Ansprüche 1 bis 3, dadurch **gekennzeichnet**, daß ihre Erzeugende (3, 3') durch eine konkave Kurve oder ein konkaves Polygon gebildet wird, deren bzw. dessen eines Ende (7, 7') der Rand der Scheibe ist, während das andere Ende (6, 6') in der Nähe ihres Mittelpunktes (4) liegt, wobei die Erzeugende vollständig auf einer einzigen Seite ihrer Tangente (5) liegt, die zu der Drehachse (4) der Scheibe rechtwinklig ist und die Erzeugende (3, 3') an einem zu ihren Enden beabstandeten Punkt berührt.

5. Scheibe nach Anspruch 4, dadurch **gekennzeichnet**, daß die inneren (6, 6') und äußeren (7, 7') Enden der Erzeugenden (3, 3') der Scheibe in derselben zur Drehachse (4) der Scheibe rechtwinkligen Ebene (8) liegen.

6. Scheibe nach Anspruch 4, dadurch **gekennzeichnet**, daß das Ende (6, 6') der Erzeugenden, das sich in der Nähe der Drehachse (4) befindet, weiter von der zur Achse (4) der Scheibe senkrechten Tangente (5) entfernt ist als das äußere Ende (7, 7') der Erzeugenden.

7. Scheibe nach irgendeinem der Ansprüche 1 bis 3, dadurch **gekennzeichnet**, daß sie insgesamt die Form einer Kugelkalotte oder eines Kegelstumpfes hat.

8. Scheibe nach einem der Ansprüche 4 bis 6, dadurch **gekennzeichnet**, daß ihr ein Schaber (24) zugeordnet ist, der in der Nähe ihrer Oberfläche angeordnet und, parallel zur Achse der Scheibe gesehen, gekrümmt ist.

9. Scheibenpflug, dadurch **gekennzeichnet**, daß er eine Vielzahl von Scheiben nach irgendeinem der Ansprüche 1 bis 8 aufweist, die auf einer frei drehbaren gemeinsamen Achse montiert sind.
